(19) Europäisches Patentamt
European Patent Office
Office européen des brevets

(11) **EP 4 431 623 A1**

(12) # EUROPEAN PATENT APPLICATION

(43) Date of publication:
**18.09.2024 Bulletin 2024/38**

(21) Application number: **24159136.1**

(22) Date of filing: **22.02.2024**

(51) International Patent Classification (IPC):
***C22C 1/04*** *(2023.01)* ***B22F 10/14*** *(2021.01)*
***B33Y 10/00*** *(2015.01)* ***B33Y 40/20*** *(2020.01)*
***C22C 21/02*** *(2006.01)* ***C22C 21/06*** *(2006.01)*
***B22F 3/10*** *(2006.01)*

(52) Cooperative Patent Classification (CPC):
(C-Sets available)
**B22F 10/14; B33Y 10/00; B33Y 40/20;**
**C22C 1/0416; C22C 21/02; C22C 21/06;**
B22F 1/103; B22F 2003/1014; B22F 2003/1042

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 JP 2023041132**

(71) Applicant: **Ricoh Company, Ltd.**
**Tokyo 143-8555 (JP)**

(72) Inventors:
- **SHIBA, Keisuke**
  **Tokyo, 143-8555 (JP)**
- **YAMAGUCHI, Daichi**
  **Tokyo, 143-8555 (JP)**
- **MIYATA, Hiroyuki**
  **Tokyo, 143-8555 (JP)**
- **OYA, Naoki**
  **Tokyo, 143-8555 (JP)**
- **MIYATA, Shimpei**
  **Tokyo, 143-8555 (JP)**

(74) Representative: **SSM Sandmair Patentanwälte Rechtsanwalt Partnerschaft mbB**
**Joseph-Wild-Straße 20**
**81829 München (DE)**

(54) **SINTERED BODY PRODUCTION METHOD**

(57) A sintered body production method includes sintering a sintering precursor containing a metal in the presence of a gas adsorbent, the gas adsorbent being activated at a temperature at which the metal is not oxidized.

FIG.1

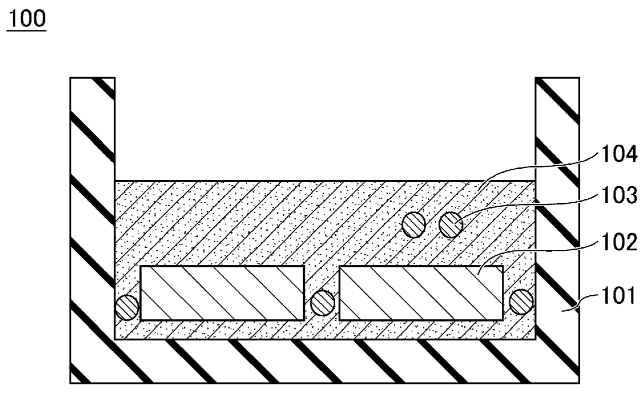


EP 4 431 623 A1

(52) Cooperative Patent Classification (CPC): (Cont.)

C-Sets
B22F 2998/10, B22F 10/14, B22F 3/1021

## Description

BACKGROUND

1. Technical Field

The present disclosure relates to sintered body production methods.

2. Description of the Related Art

A technique of forming a sintered body by sintering a metal has been known. For example, PCT Japanese Translation Patent Publication No. 2010-500469 proposes a method for forming an article by metal injection molding of aluminum or an aluminum alloy, the method including a step of sintering that is conducted in the presence of a gas adsorbent such as magnesium or the like.

However, such related art cannot form a sintered body with a high sintered density.

SUMMARY

A sintered body production method of the present disclosure includes a sintering step of sintering a sintering precursor containing a metal in the presence of a gas adsorbent, the gas adsorbent being activated at a temperature at which the metal is not oxidized.

BRIEF DESCRIPTION OF THE DRAWINGS

FIG. 1 is a schematic cross-sectional view illustrating an example of a sintering furnace used in a sintered body production method according to one embodiment of the present disclosure.

FIG. 2 is a flowchart illustrating the example of the sintered body production method according to the embodiment of the present disclosure.

FIG. 3 is a schematic view illustrating an example of a molded body production apparatus used for the sintered body production method according to the embodiment of the present disclosure.

DETAILED DESCRIPTION

It is an objective of the present disclosure to provide a sintered body production method that can produce a sintered body with a high sintered density.

(Sintered body production method)

The sintered body production method of the present disclosure includes a sintering step of sintering a sintering precursor containing a metal in the presence of a gas adsorbent, the gas adsorbent being activated at a temperature at which the metal is not oxidized; and if necessary, further includes other steps.

As used herein, the term "sintered body" refers to an object that has been sintered, in other words, an object after undergoing the sintering step. The sintered body is an object obtained by sintering the sintering precursor.

As used herein, the term "sintering precursor" refers to a precursor that has not been sintered yet, in other words, an object before undergoing the sintering step. The sintering precursor is a generic term that represents a three-dimensional object maintaining a certain three-dimensional shape. The sintering precursor refers to, for example, a solidified body or a structure derived from a solidified body. Specifically, the sintering precursor is a concept representing a shaped body, a molded body (green body), a degreased body (brown body), a stacked body, a solidified body, a cured body, or the like. No particular limitation is imposed on the sintering precursor, which may be produced by a publicly known method in accordance with the intended purpose as long as the sintering precursor is an object containing a metal.

The shaped body may or may not be compacted. The shaped body obtained by compacting powder is referred to as a powder-compacted shaped body. Also, the shaped body obtained by molding without compaction is referred to as a molding shaped body. The powder-compacted shaped body, obtained by compacting powder in a powder-compacting step, may be used as the shaped body. Alternatively, the molding shaped body, obtained by shaping with a mold without compaction, may be used as the shaped body.

The molded body (green body) is an object that is molded by the molded body production apparatus. This

molded body production apparatus enables molding into even a complicated shape. No particular limitation is imposed on a process employed in the molded body production apparatus, and the process may be a given publicly known process that may be selected in accordance with the intended purpose. However, binder jetting is preferable in terms of metal molding. For example, the molded body can be successfully molded using metal-containing powder and molding liquid by the molded body production method including a powder layer-forming step, a molding liquid-applying step, and a stacking step.

The degreased body (brown body) is an object obtained by degreasing the molded body (green body). The degreased body can be obtained by thermally treating and degreasing the molded body in a degreasing step.

-Metal-

The metal is a particle containing a metal that is a constituent material of the sintered body. The metal preferably includes powder of a pure metal, powder of an alloy, or both.

Examples of the metal include aluminum (Al), magnesium (Mg), titanium (Ti), vanadium (V), chromium (Cr), manganese (Mn), iron (Fe), cobalt (Co), nickel (Ni), copper (Cu), zinc (Zn), yttrium (Y), zirconium (Zr), niobium (Nb), molybdenum (Mo), lead (Pd), silver (Ag), indium (In), tin (Sn), tantalum (Ta), tungsten (W), neodymium (Nd), alloys of these metals, and the like. Of these, aluminum (Al), stainless steel (SUS), iron (Fe), copper (Cu), silver (Ag), titanium (Ti), alloys of these metals, and the like are preferable.

The metal preferably contains Al and more preferably further contains Si, Mg, or both.

The metal may further contain at least one metal element selected from the group consisting of Zn, Fe, Mn, Cr, Ti, Zr, Ni, B, V, Sn, Bi, and Cu.

Examples of the alloys of aluminum include $AlSi_{10}Mg$, $AlSi_{12}$, $AlSi_7Mg_{0.6}$, $AlSi_3Mg$, $AlSi_9Cu_3$, Scalmalloy, ADC12, $AlSi_3$, and the like. These may be used alone or in combination.

The metal may also contain a non-metal material. However, the metal preferably contains the metal as a main material. Containing the metal as a main material means that the mass of the metal contained in metal particles is 50.0% by mass or more relative to the mass of the metal particles. The mass of the metal contained in the metal particles is preferably 60.0% by mass or more, more preferably 70.0% by mass or more, further preferably 80.0% by mass or more, and especially preferably 90.0% by mass or more.

No particular limitation is imposed on the median diameter of the metal particles, which may be appropriately selected depending on the intended purpose. However, the median diameter of the metal is preferably 2 um or more and 100 um or less and more preferably 8 um or more and 50 um or less.

The median diameter of the metal particles can be measured using a publicly known particle size analyzer, such as a particle size distribution analyzer MICROTRAC MT3000II series (available from MicrotracBEL Corp.) or the like.

The sintered body production method of the present disclosure has been accomplished on the basis of an issue in the following related art that has been found by the present inventors.

Specifically, according to an existing shaping method of an article (PCT Japanese Translation Patent Publication No. 2010-500469), sintering is performed in the presence of Mg, which is an evaporable getter having an activation temperature of about 500°C (evaporable gas adsorbent).

For example, when Al is contained in the shaped body as the metal, oxidation of Al readily proceeds at a temperature higher than 450°C. Therefore, the present inventors have found that the activation temperature of the gas adsorbent is desirably 450°C or lower. A temperature of 450°C or lower is a temperature at which the metal is not oxidized.

It is generally considered that sintering of the sintering precursor containing aluminum (Al) as the metal is challenging. This is because sintering is inhibited by an oxide film that is formed on the surfaces of Al particles through reaction with oxygen in a sintering furnace. In order to break this oxide film, the shaped body (non-sintered body) is heated to a temperature between a liquidus curve of aluminum and a solidus curve of aluminum, thereby transforming some of the Al particles into a liquid phase. As a result, necking between the Al particles occurs, and sintering proceeds. Therefore, in the sintering step, it is desirable to reduce the oxygen concentration in a furnace and avoid forming the oxide film on the surfaces of the Al particles.

Sintering of an alloy containing Al and Mg is even more challenging. Similar to Al, Mg reacts with oxygen in a sintering furnace, thereby forming an oxide film and inhibiting sintering. Even if Al is transformed into a liquid phase, the oxide film of Mg does not break, and consequently sintering does not proceed. Therefore, in order for Mg to avoid reacting with oxygen, it is desirable to reduce the oxygen concentration in a furnace in the sintering step. The oxygen concentration in the furnace can be reduced by allowing the furnace to be in a high-vacuum state. However, the vapor pressure of Mg is high, and thus Mg is evaporated from a Mg-containing alloy in a high-vacuum state.

The present inventors have diligently addressed the above-described issue, and found that the sintered body production method of the present disclosure can provide a sintered body with a high sintered density. On the basis of this finding, the present disclosure has been completed.

By using the gas adsorbent that is activated at the temperature at which the metal is not oxidized, it is possible

to reduce the oxygen concentration in the sintering furnace. Therefore, it is possible to reduce the oxygen concentration in the furnace in a temperature range in which oxidation of a readily oxidizable metal proceeds, such as Al, Mg, and the like. Thus, oxidation of the readily oxidizable metal can be effectively suppressed, and the sintering precursor containing the readily oxidizable metal can be sintered to have a high density.

<Sintering step>

The sintering step is a step of sintering the sintering precursor containing the metal in the presence of the gas adsorbent that is activated at a temperature at which the metal is not oxidized. The sintering step is performed by a sintering part.

By performing the sintering step, the sintering precursor can be formed into a compacted and integrated sintered body of the metal.

The sintering step integrates metal materials forming the metal particles by heating the sintering precursor for a certain period of time at a temperature that is equal to or higher than the solidus-curve temperature of the metal and is equal to or lower than the liquidus-curve temperature of the metal. For example, when particles of $AlSi_{10}Mg$ are used as the metal particles, the solidus-curve temperature is about 570°C, the liquidus-curve temperature is about 600°C, and the heating time is from 1 hour through 10 hours.

The heating rate in the sintering step is preferably from 1°C/hour through 200°C/hour. The maximum temperature that is reachable in the sintering step is preferably a temperature at which the shaped body containing Al transforms into an aluminum liquid phase by from 10% through 50%.

Note that, the heating rate may be changed during the sintering step. After heating, the interior of the apparatus is cooled, and the sintered body is removed.

The sintering step is preferably performed in an atmosphere containing an inert gas.

The inert gas is preferably Ar, $N_2$, $H_2$, or a gas mixture thereof, and $N_2$ or Ar is more preferable.

The inner pressure of a furnace in the sintering step is preferably 200 Pa (2 mbar) or higher because a readily evaporable metal (e.g., Mg) can be retained in the sintered body.

No particular limitation is imposed on the sintering part, which may be appropriately selected in accordance with the intended purpose. Examples thereof include publicly known sintering furnaces. The following description will be made about an example that uses a sintering furnace as the sintering part. Note that, the sintering part may be employed in the same manner as in a degreasing part. Also, the degreasing step and the sintering step may be performed sequentially.

-Gas adsorbent-

The gas adsorbent is a gas adsorbent that is activated at a temperature at which the metal is not oxidized. The gas adsorbent is preferably a non-evaporable gas adsorbent and more preferably a non-evaporable gas adsorbent that is activated at 450°C or lower.

The "gas adsorbent" is also called a "getter" and is a material that adsorbs gases such as oxygen, nitrogen, carbon monoxide, carbon dioxide, hydrogen, methane, vaporized $H_2O$, and the like.

The gas adsorbent is roughly classified into two types of gas adsorbents, which are called a non-evaporable gas adsorbent and an evaporable gas adsorbent.

The non-evaporable gas adsorbent refers to a gas adsorbent that does not evaporate and adsorbs gas in a state in which the gas adsorbent remains a solid. The evaporable gas adsorbent refers to a gas adsorbent that evaporates into gas and adsorbs the gas.

Note that, examples of the evaporable gas adsorbent include Mg, Ba, Ca, and the like.

No particular limitation is imposed on the non-evaporable gas adsorbent, which may be appropriately selected in accordance with the intended purpose. Examples thereof include gas adsorbents containing Zr, Ti, V, Hf, Nb, Ta, or Zr as a main component thereof. Specific examples thereof include alloys such as ZrVFe, ZrVMnFe, ZrFe, ZrFeY, ZrTi, ZrV, ZrNi, ZrAl, ZrCo, ZrPd, ZrVW, ZrAlV, ZrVTi, ZrTiNi, and the like.

The non-evaporable gas adsorbent preferably contains Zr and more preferably further contains at least one metal element selected from the group consisting of Ni, V, Mn, Fe, Y, Co, Pd, and Ti.

The activation temperature of the non-evaporable gas adsorbent is preferably 450°C or lower. When the sintering precursor containing Al as the metal is sintered, the activation temperature thereof is preferably 200°C or higher and 450°C or lower in consideration of oxidation reaction of Al, and more preferably 300°C or higher and 400°C or lower. When the activation temperature thereof is higher than 450°C, oxidation reaction of Al rapidly proceeds, resulting in lowering the sintered density.

When the non-evaporable gas adsorbent is disposed in the sintering furnace, the sintering step can be performed in the presence of the non-evaporable gas adsorbent.

The non-evaporable gas adsorbent may be used alone, or different gas adsorbents may be used in combination. Different gas adsorbents have different temperature ranges in which gas is adsorbed. Therefore, use of different gas adsorbents in combination is preferable because gas can be removed in a broader temperature range.
In the sintering step, the non-evaporable gas adsorbent is preferably disposed around the shaped body (non-sintered body). The non-evaporable gas adsorbent may be disposed in or charged into the sintering furnace before the start of the sintering step or during the sintering step. Alternatively, when the degreasing step is performed before the sintering step, the non-evaporable gas adsorbent may be disposed in or charged into the sintering furnace before the start of the degreasing step.
FIG. 1 illustrates an example of the sintering furnace for performing the sintered body production method in the present embodiment. A sintering furnace 100 as illustrated in FIG. 1 includes: an alumina box serving as a sintering vessel 101; a sintering precursor 102; a non-evaporable gas adsorbent 103 around the sintering precursor 102; and ceramics powder 104 in which the sintering precursor 102 is disposed.

[Gas-adsorbing effects of the non-evaporable gas adsorbent]

The surface of the non-evaporable gas adsorbent is covered with an oxide, a nitride, and the like at normal temperature. Thus, adsorption of gas does not occur at normal temperature. By heating the non-evaporable gas adsorbent, the oxide, the nitride, and the like on the surface are decomposed, and an oxygen atom, a nitrogen atom, and the like diffuse into the material of the non-evaporable gas adsorbent. As a result, a non-oxidized metal surface is exposed on the surface of the non-evaporable gas adsorbent. Thus, the non-evaporable gas adsorbent can adsorb gas molecules on the surface thereof, and exhibit gas-adsorbing effects.
The temperature at which the non-evaporable gas adsorbent exhibits gas-adsorbing effects is varied with the types of the metal elements thereof or the compositions of alloys of metals.
Ti, TiAl, ZrAl, or the like is called a high-temperature-activated gas adsorbent that is activated at 700°C or higher. ZrVFe, ZrVMnFe, ZrFe, or the like is called a low-temperature-activated gas adsorbent that is activated at 450°C or lower and preferably at 100°C or higher and 400°C or lower.
The gas adsorbent adsorbs gas on the surface thereof. Thus, the gas adsorbent is preferably in the form of a porous body having an increased surface area (sponge form), a chip, an assembly of fibers (thin fibers), an assembly of particulate matters or powder, or the like.

[Oxidation of the metal in the sintering step]

It is generally considered that sintering of the sintering precursor containing aluminum (Al) as the metal is challenging. This is because sintering is inhibited by an oxide film on the surfaces of Al particles. In order to break this oxide film, the shaped body (non-sintered body) is heated to a temperature between a liquidus curve of aluminum and a solidus curve of aluminum, thereby transforming some of the Al particles into a liquid phase. As a result, necking between the Al particles occurs, and sintering proceeds. When the sintering precursor contains an Al alloy containing magnesium (Mg), sintering is inhibited by Mg as well as the oxide film on the surfaces of Mg particles. Therefore, when Al, Mg, or both are contained as the metal, oxidation thereof needs suppressing.
Meanwhile, Al is more readily oxidized by being heated. The oxidation reaction thereof rapidly proceeds at 450°C or higher (Takashi Abe, "Regarding Aluminum Surface Phenomenon", Journal of Aluminum Finishing Society of Kinki, 38(1973):8-18). Therefore, necking between Al particles occurs at 450°C or higher. It is desirable to remove oxygen in the sintering furnace during heating at a temperature lower than 450°C. A specific method of removing oxygen in the furnace is, for example, using the low-temperature-activated gas adsorbent. The low-temperature-activated gas adsorbent is activated at 450°C or lower at which oxidation of Al proceeds, and exhibits oxygen-adsorbing effects. Oxygen in the furnace reacts with the gas adsorbent preferentially to Al, and thus sintering of Al becomes possible.
[Weight per inner volume of the furnace] No particular limitation is imposed on the amount of the gas adsorbent, which may be appropriately selected in accordance with the intended purpose. In terms of the weight of the gas adsorbent per inner volume of the furnace, the amount of the gas adsorbent is preferably 4.1 g/L or more, more preferably 4.1 g/L or more and 24 g/L or less, and further preferably 4.1 g/L or more and 8.4 g/L or less. Note that, the inner volume of the furnace refers to a volume of the furnace alone excluding the sintered body.

--Powder--

The powder contains a metal and if necessary, may further contain other components.
Examples of the other components include fillers, leveling agents, sintering aids, polymer resin particles, and the like.
An angle of repose of the powder is preferably 60° or less, more preferably 50° or less, and further preferably

40° or less. The angle of repose of the powder can be measured using, for example, a powder characteristics analyzer (Powder Tester Model PT-N, available from Hosokawa Micron Corporation).

When the angle of repose of the powder is 60° or less, the powder can be stably disposed in a predetermined region.

--Molding liquid--

The molding liquid contains a resin and an organic solvent; and if necessary, may further contain other components such as additives and the like.

A viscosity of the molding liquid is preferably 5 mPa·s or higher and 50 mPa·s or lower at 25°C, more preferably 5 mPa·s or higher and 40 mPa·s or lower at 25°C, and further preferably 5 mPa·s or higher and 30 mPa·s or lower at 25°C. The viscosity can be measured, for example, in accordance with JIS K7117. When the viscosity of the molding liquid falls within the above range, discharge of the molding liquid is stabilized, and the bending strength of the sintering precursor is further increased and moreover dimensional accuracy is also increased.

A surface tension of the molding liquid is preferably 40 mN/m or lower at 25°C and more preferably 10 mN/m or higher and 30 mN/m or lower at 25°C. The surface tension can be measured using, for example, DY-300 (available from Kyowa Interface Science Co., Ltd.). When the surface tension of the molding liquid falls within the above range, discharge of the molding liquid is stabilized, and the bending strength of the sintering precursor is further increased and moreover dimensional accuracy is also increased.

---Resin---

The resin functions as a binder.

When the resin is heated from 30°C to 550°C, it is preferable that 95% by mass or more of the resin be thermally decomposed, and it is more preferable that 97% by mass or more of the resin be thermally decomposed.

The "resin is thermally decomposed" means that random decomposition of the backbone of the resin, depolymerization at the end of the molecular chain of the resin, or the like occurs, and the resin is removed through vaporization, oxidative decomposition, combustion, or the like. The thermal decomposition can be measured with a thermogravimetry-differential thermal analyzer (TG-DTA) in the following manner. Specifically, the resin is heated from 30°C to 550°C at 10°C/min in an ambient or nitrogen atmosphere. Further, after the temperature of the resin has reached 550°C, the resin is maintained at the same temperature for 2 hours. Then, a weight reduction rate of the resin before and after heating can be determined.

A glass transition temperature (Tg) of the resin is preferably 0°C or higher, more preferably 10°C or higher, and further preferably 20°C or higher. Also, the Tg of the resin is preferably 100°C or lower, more preferably 90°C or lower, and further preferably 80°C or lower.

A softening point of the resin is preferably 70°C or higher, more preferably 80°C or higher, and further preferably 90°C or higher. Also, the softening point of the resin is preferably 150°C or lower, more preferably 140°C or lower, and further preferably 130°C or lower.

A number average molecular weight (Mn) of the resin is preferably 5,000 or higher and 50,000 or lower and more preferably 10,000 or higher and 30,000 or lower.

The resin preferably contains at least one constituent unit selected from the group consisting of a constituent unit represented by the following formula (1) and a constituent unit represented by the following formula (2). Note that, the "constituent unit" means a partial structure in a resin derived from one or more polymerizable compounds.

Examples of the resin include polyvinyl acetate resins, partially saponified polyvinyl acetate resins, polyvinyl butyral resins, and the like. These may be used alone or in combination. These resins may be a commercially available product or a synthesized product.

Note that, the partially saponified polyvinyl acetate resins are resins obtained by partially saponifying polyvinyl acetate resins.

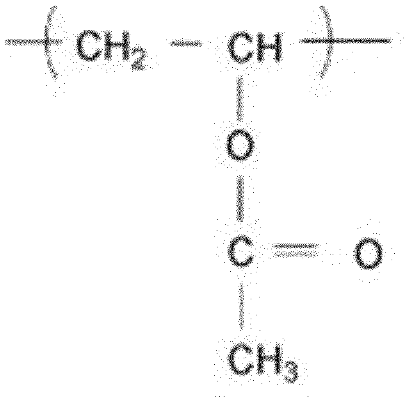

Formula (1)

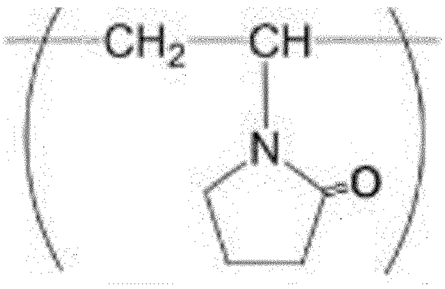

Formula (2)

The constituent unit represented by formula (1) in the resin has hydrophobicity. Also, the resin containing the constituent unit represented by formula (1) is preferably soluble in the organic solvent of the molding liquid and insoluble in water.

The resin containing the constituent unit represented by formula (1) may be a resin containing a constituent unit other than the constituent unit represented by formula (1) or may be a resin not containing the constituent unit other than the constituent unit represented by formula (1).

The constituent unit other than the constituent unit represented by formula (1) is preferably a constituent unit represented by the following formula (3), a constituent unit represented by the following formula (4), or the like.

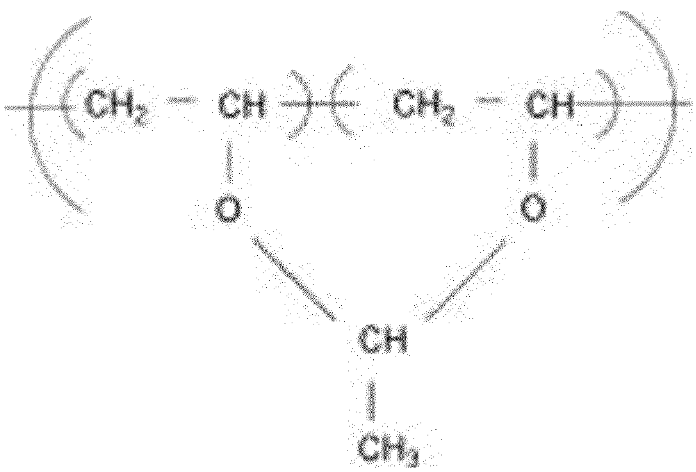

Formula (3)

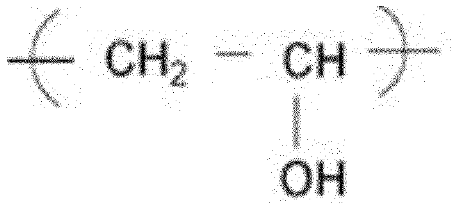

Formula (4)

The constituent unit represented by formula (3) also has hydrophobicity. Thus, the resin containing the constituent unit represented by formula (3) has increased solubility in the organic solvent.

The hydroxy group in the constituent unit represented by formula (4) can increase affinity with the metal particles in a powder layer to which the molding liquid is to be applied.

The polyvinyl acetate resin contains the constituent unit represented by formula (1). Meanwhile, the polyvinyl acetate resin is a resin that is substantially free of the constituent unit represented by formula (3) and the constituent unit represented by formula (4).

The partially saponified polyvinyl acetate resin contains the constituent unit represented by formula (1) and the constituent unit represented by formula (4). Meanwhile, the partially saponified polyvinyl acetate resin is a resin that is substantially free of the constituent unit represented by formula (3).

The polyvinyl butyral resin is a resin that contains the constituent unit represented by formula (1) and the constituent unit represented by formula (3) or is a resin that contains the constituent unit represented by formula (1), the constituent unit represented by formula (3), and the constituent unit represented by formula (4).

---Organic solvent---

The organic solvent is a liquid component and forms the molding liquid into a liquid state at normal temperature. By containing the organic solvent, the molding liquid is preferably a non-aqueous molding liquid.

The non-aqueous molding liquid means a molding liquid that contains the organic solvent as one of the liquid components of the molding liquid, and in which the liquid component having the largest mass is the organic solvent. Also, the non-aqueous molding liquid is such that the content of the organic solvent relative to the content of the liquid components in the molding liquid is preferably 90.0% by mass or more and more preferably 95.0% by mass or more. Further, the non-aqueous molding liquid is, for example, a molding liquid that is substantially free of water. The non-aqueous molding liquid is readily applicable as a molding liquid even if the material forming the metal particles is a highly active metal, in other words, a water-reactive material (e.g., aluminum, titanium, or the like). The non-aqueous molding liquid has increased solubility, especially in the resin containing the constituent unit represented by formula (1), and the viscosity of the molding liquid is reduced and the discharge thereof is stabilized.

A viscosity of the organic solvent is preferably 5.0 mPa·s or higher and 50.0 mPa·s or lower at 25°C and more preferably 8.0 mPa·s or higher and 30.0 mPa·s or lower at 25°C.

The viscosity can be measured, for example, in accordance with JIS K7117.

A boiling point of the organic solvent is high, preferably 150°C or higher, and more preferably 180°C or higher. When the boiling point of the organic solvent is high, drying of the molding liquid is suppressed.

No particular limitation is imposed on the organic solvent. However, examples thereof include γ-butyrolactone (boiling point: 204°C), propylene carbonate (boiling point: 242°C), cyclohexanone (boiling point: 155.6°C), diethylene glycol dimethyl ether (boiling point: 162°C), triethylene glycol dimethyl ether (boiling point: 216°C), and the like.

Further examples thereof include n-octane, m-xylene, solvent naphtha, diisobutyl ketone, 3-heptanone, 2-octanone, acetylacetone, butyl acetate, amyl acetate, n-hexyl acetate, n-octyl acetate, ethyl butyrate, ethyl valerate, ethyl caprylate, ethyl octanoate, ethyl acetoacetate, ethyl 3-ethoxypropionate, diethyl oxalate, diethyl malonate, diethyl succinate, diethyl adipate, bis-2-ethylhexyl maleate, triacetin, tributyrin, propylene glycol monomethyl ether acetate, ethylene glycol monobutyl ether acetate, dibutyl ether, 1,2-dimethoxybenzene, 1,4-dimethoxybenzene, diethylene glycol monobutyl ether, diethylene glycol dimethyl ether, triethylene glycol dimethyl ether, 2-methoxy-1-methylethyl acetate, γ-butyrolactone, propylene carbonate, cyclohexanone, butyl cellosolve, and the like.

These may be used alone or in combination.

No particular limitation is imposed on the organic solvent used when the resin containing the constituent unit represented by formula (1) is used. For example, the organic solvent used is preferably an organic solvent having at least one structure selected from the group consisting of an alkoxy group, an ether bond, and an ester bond, more preferably an organic solvent having an ether bond, and especially preferably alkylene glycol dialkyl ethers.

When these organic solvents are used, solubility of the resin containing the constituent unit represented by formula (1) is further increased.

Note that, "alkylene glycol dialkyl ethers" are organic solvents represented by $R^1$-($OR^2$)m-$OR^3$.

$R^1$ and $R^3$ are each independently an alkyl group having 1 or more and 5 or less carbon atoms and preferably 1 or 2 carbon atoms, and may be a straight chain or may be branched.

$R^2$ is an alkylene group having 2 or more and 5 or less carbon atoms and preferably 2 or 3 carbon atoms, and may be a straight chain or may be branched.

m is an integer of 1 or more and 5 or less and preferably 2 or 3.

Examples of the alkylene glycol dialkyl ethers include diethylene glycol dimethyl ether, triethylene glycol dimethyl ether, diethylene glycol ethyl methyl ether, diethylene glycol butyl methyl ether, and the like. Of these, diethylene glycol dimethyl ether and triethylene glycol dimethyl ether are preferable, and triethylene glycol dimethyl ether is more preferable.

When the resin containing the constituent unit represented by formula (2) is used, the organic solvent used is preferably a polar solvent.

The polar solvent is, for example, preferably at least one selected from Component 1 that is the group consisting of cyclic esters (lactones), cyclic ketones, and alkylene glycol monoalkyl ethers. It is more preferable to further use, as the polar solvent, at least one selected from Component 2 that is the group consisting of alkylene glycol dialkyl ethers, in addition to the at least one selected from Component 1.

When these organic solvents are used, solubility of the resin containing the constituent unit represented by formula (2) is further increased.

Note that, in view that solubility of the resin containing the constituent unit represented by formula (2) is further increased, Component 1 is preferably the group consisting of cyclic esters (lactones) and cyclic ketones.

Specific examples included in Component 1, which is the group consisting of cyclic esters (lactones), cyclic ketones, and alkylene glycol monoalkyl ethers, include $\gamma$-butyrolactone, propylene carbonate, cyclohexanone, and the like.

Specific examples included in Component 2, which is the group consisting of alkylene glycol dialkyl ethers, include diethylene glycol dimethyl ether, triethylene glycol dimethyl ether, diethylene glycol ethyl methyl ether, diethylene glycol butyl methyl ether, and the like. Of these, diethylene glycol dimethyl ether and triethylene glycol dimethyl ether are preferable.

The "alkylene glycol monoalkyl ethers" are organic solvents represented by $R^4$-(O-$R^5$)n-OH.

$R^4$ is an alkyl group having 1 or more and 5 or less carbon atoms, and may be a straight chain or may be branched.

$R^5$ is an alkylene group having 2 or more and 5 or less carbon atoms, and may be a straight chain or may be branched.

n is an integer of 1 or more and 5 or less.

---Other components---

In accordance with the intended purpose, the molding liquid may appropriately contain other components such as a surfactant, an anti-drying agent, a viscosity adjuster, a penetrant, a defoamer, a pH adjuster, an antiseptic, an antifungal agent, a colorant, a preservative, a stabilizer, and the like.

---Water---

The molding liquid is substantially free of water. The "molding liquid is free of water" means that water is not positively used as a material for producing the molding liquid and/or that the content of water in the molding liquid is equal to or lower than the detection limit in the case of using a publicly known and commonly used method.

The content of water in the molding liquid is 10.0% by mass or less relative to the mass of the molding liquid, preferably 5.0% by mass or less relative to the mass of the molding liquid, more preferably 3.0% by mass or less relative to the mass of the molding liquid, and further preferably 1.0% by mass or less relative to the mass of the molding liquid. Especially preferably, the molding liquid is free of water. When the molding liquid is substantially free of water, the solubility of the resin is further increased, and the viscosity of the molding liquid can be further decreased. Also, formation of a hydrogel including much water around the resin is suppressed, and a resulting increase in the viscosity of the molding liquid is suppressed.

As illustrated in the flowchart of FIG. 2, the sintered body production method preferably includes powder layer-forming step (S1) of forming a powder layer containing powder, molding liquid-applying step (S2) of applying the molding liquid to the powder layer, and stacking step (S3) of sequentially repeatedly performing the powder layer-forming step and the molding liquid-applying step, thereby forming the stacked body; and may further include excessive powder-removing step (S4) of removing excessive powder to form the shaped body.

The sintering step can be performed using the above stacked body as the sintering precursor.

The sintered body production method preferably includes degreasing step (S5) of heating the shaped body in an atmosphere containing an inert gas, thereby forming the degreased body from which the resin is removed. The

sintered body can be produced by performing sintering step (S6) using the degreased body as the sintering precursor.

Also, the sintered body production method may include a powder-compacting step of compacting powder to form the powder-compacted shaped body. The sintering step can be performed using the powder-compacted shaped body as the sintering precursor.

<Powder layer-forming step>

The powder layer-forming step is a step of forming a powder layer containing powder, and is performed by a molding part configured to form a powder layer containing powder.

The powder layer is formed on a support (a molding stage). No particular limitation is imposed on a method of disposing powder on the support to form a thin layer of the powder. The method may be appropriately selected in accordance with the intended purpose.

No particular limitation is imposed on a thickness of the powder layer, which may be appropriately selected in accordance with the intended purpose. For example, an average thickness per layer is preferably 30 um or larger and 500 um or smaller and more preferably 60 um or larger and 300 um or smaller.

When the average thickness is 30 μm or larger, strength of a solidified body formed by applying the molding liquid to the powder is increased. Thus, it is possible to suppress collapsing and the like which could occur in the subsequent steps such as the sintering step and the like. When the average thickness is 500 um or smaller, dimensional accuracy of the molded body is increased because the molded body is from the solidified body formed by applying the molding liquid to the powder.

Note that, no particular limitation is imposed on the average thickness, which may be measured in accordance with a publicly known method.

Note that, the powder supplied by the molding part may be housed in a powder housing. The powder housing is a member such as, for example, a container in which the powder is housed. Examples thereof include storage tanks, bags, cartridges, tanks, and the like.

<Molding liquid-applying step>

The molding liquid-applying step is a step of applying the molding liquid to the powder layer, and is performed by an applying part configured to apply the molding liquid to the powder layer.

A method of applying the molding liquid to the powder layer is preferably a method of discharging the molding liquid.

No particular limitation is imposed on the method of discharging the molding liquid, which may be appropriately selected in accordance with the intended purpose. Examples thereof include dispensing, spraying, ink jetting, and the like. Of these, dispensing is excellent in quantitation accuracy of droplets but is narrow in application area. Spraying can simply form minute discharged products and achieves a wide application area, and thus is excellent in application performances. However, spraying is poor in quantitation accuracy of droplets, and causes scattering of the molding liquid due to spray flow. Therefore, ink jetting is preferable. Ink jetting is more excellent in quantitation accuracy of droplets than spraying, achieves an application area wider than in dispensing, and can accurately and efficiently form a complicated molded body.

When ink jetting is used, the applying part configured to apply the molding liquid to the powder layer is an inkjet head including a nozzle configured to discharge the molding liquid.

Note that, the molding liquid supplied to the molding liquid-applying part may be housed in a molding liquid-housing part. The molding liquid-housing part is a member such as, for example, a container in which the molding liquid is housed. Examples thereof include storage tanks, bags, cartridges, tanks, and the like.

<Stacking step>

The stacking step is a step of sequentially repeatedly performing the powder layer-forming step and the molding liquid-applying step, thereby forming the stacked body, and is performed by the molding part and the applying part.

The "stacked body" is a structure that includes a plurality of stacked powder layers each including a region to which the molding liquid is applied. The structure may be one not including any three-dimensional object that retains a certain three-dimensional shape in the interior thereof. Alternatively, the structure may be one including a three-dimensional object that retains a certain three-dimensional shape in the interior thereof. The sintering step can be performed using the stacked body as the sintering precursor.

The stacking step includes a step of disposing powder on the thin layer (powder layer-forming step) and a step of applying the molding liquid onto the thin layer (molding liquid-applying step). This forms a molding liquid-applied region in the powder layer. Moreover, the stacking step includes a step of similarly disposing (stacking) powder on the thin

layer that is the powder layer including a molding liquid-applied region (powder layer-forming step) and a step of applying the molding liquid onto the thin layer (molding liquid-applying step). This forms a molding liquid-applied region in the newly stacked powder layer. Note that, at this time, the molding liquid-applied region in the thin layer of the powder stacked as the uppermost layer is continuous with the molding liquid-applied region in the underlying thin layer of the powder. As a result, the molding liquid-applied region with a thickness equivalent to two powder layers is obtained.

A stacking pitch, which is a pitch at which the next powder layer is stacked onto the previous powder layer, is preferably 55 um or more and 120 um or less.

<Degreasing step>

The degreasing step is a step of heating the stacked body or the shaped body (green body), thereby forming a degreased body from which the resin is removed, and is performed by the degreasing part.

The degreasing step is preferably performed in an atmosphere containing an inert gas.

The "degreased body" (brown body) is a three-dimensional object that is obtained by degreasing organic components such as the resin and the like from the stacked body or the shaped body.

The degreasing step is performed using the degreasing part. Specifically, the organic components are decomposed and removed by heating the shaped body, for a certain period of time, at a temperature that is equal to or higher than the thermal decomposition temperature of the organic components such as the resin and the like and that is lower than the melting point or the solidus-curve temperature of the material (metal) forming the metal particles. For example, when particles of $AlSi_{10}Mg$ are used as the metal particles, the solidus-curve temperature thereof is a temperature lower than about 570°C and the heating time is from 1 hour through 10 hours.

Depending on the type of the resin component contained in the shaped body (green body), it is possible to set a plurality of temperatures at which the shaped body is heated and retained.

No particular limitation is imposed on the degreasing part, which may be appropriately selected in accordance with the intended purpose. Examples thereof include publicly known sintering furnaces, electric furnaces, and the like.

Alternatively, a degreasing method through solvent extraction rather than heating may be used. The degreasing method through solvent extraction immerses the green body in a solvent, thereby extracting the resin.

<Powder-compacting step>

The powder-compacting step is a step of compacting powder to form a powder-compacted shaped body, and is performed by a powder-compacting part.

No particular limitation is imposed on the powder-compacting part, which may be appropriately selected in accordance with the intended purpose. Examples thereof include shape compactors.

No particular limitation is imposed on the compacting pressure, which may be appropriately selected in accordance with the intended purpose. The compacting pressure is preferably 29.4 kN or higher and 73.5 kN or lower.

<Other steps>

No particular limitation is imposed on the other steps, which may be appropriately selected in accordance with the intended purpose. Examples thereof include a drying step, an excessive powder-removing step, a post-treatment step, and the like.

-Drying step-

The sintered body production method preferably includes a drying step of drying the shaped body (green or stacked body) to remove liquid components remaining in the shaped body.

The drying step may remove organic matter contained in the shaped body, in addition to the liquid components such as the organic solvent and the like contained in the shaped body. As a drying part, a publicly known dryer, a thermo-hygrostat, or the like can be used.

-Excessive powder-removing step-

The sintered body production method preferably includes an excessive powder-removing step of removing powder that is excessive powder attached to the stacked body or the cured body, thereby forming the shaped body (green body).

The "green body" is a three-dimensional object that retains a certain three-dimensional shape. The green body is obtained through adhesion between particles via a resin, and is in a state free of flowability. The green body has

undergone the excessive powder-removing step of removing the excessive powder that does not form the stacked body or the cured body. Preferably, the green body is a three-dimensional object to which the excessive powder is not substantially attached.

As an excessive powder-removing method, examples thereof include a method of removing the excessive powder from the stacked body or the cured body through air blowing, a method of removing the excessive powder from the cured body by immersing the cured body in a removing liquid.

-Post-treatment step-

The sintered body production method preferably includes a post-treatment step of performing a post treatment to the sintered body. No particular limitation is imposed on the post-treatment step, which may be appropriately selected in accordance with the intended purpose. Examples thereof include a surface protection treatment step, a coating step, and the like.

The surface protection treatment step is a step of forming a protection layer on the sintered body. By performing the surface protection treatment step, the surface of the sintered body can be provided with durability and the like that enable the sintered body to be used as is. Specific examples of the protection layer include a waterproof layer, a weather resistance layer, a light resistance layer, a heat insulating layer, and a gloss layer. As a surface protection treatment part, examples thereof include publicly known surface protection treatment devices, such as a spray, a coater, and the like.

The coating step is a step of coating the sintered body. By performing the coating step, the green body can be colored to have a desired color. As a coating part, examples thereof include publicly known coaters, such as a spray, a roller, a brush, and the like.

Here, the flow of the molding in the sintered body production method of the present disclosure will be described with reference to FIG. 3. FIG. 3 is a schematic view illustrating an example of a production apparatus for a molded body (sintering precursor) used in the sintered body production method of the present disclosure.

A molding apparatus 1000 includes a molding part 1 and an applying part 5. The molding part 1 forms a powder layer 31 containing powder 20. The applying part 5 applies a molding liquid 10 to the powder layer 31, thereby forming a molded layer 30. In the molding apparatus 1000, a plurality of molded layers 30 are stacked, and a molded body is formed.

The molding part 1 includes a powder tank 11 and a stacking unit 16. The powder tank 11 includes a supplying tank 21, a molding tank 22, a supplying stage 23, a molding stage 24, and an excessive powder tank 25. The powder tank 11 has a box shape. The three upper surfaces of the supplying tank 21, the molding tank 22, and the excessive powder tank 25 are open.

The stacking unit 16 includes a flattening part 12 and a powder-removing part 13.

The supplying tank 21 is a tank configured to supply the powder 20 to the molding tank 22. The supplying tank 21 also retains the powder 20 to be supplied to the molding tank 22. The bottom of the supplying tank 21 is provided with the supplying stage 23. The supplying stage 23 rises and lowers in the vertical direction (Z direction). The lateral surfaces of the supplying stage 23 are disposed so as to contact the inner lateral surfaces of the supplying tank 21.

The molding tank 22 receives supply of the powder 20 necessary for molding, from the supplying tank 21. In the molding tank 22, the powder layer 31 and the molded layer 30 are formed. Further, in the molding tank 22, a plurality of molded layers 30 are stacked, and a molded body is formed.

The bottom of the supplying tank 21 is provided with the supplying stage 23, and the bottom of the molding tank 22 is provided with the molding stage 24. Each of the stages rises and lowers in the vertical direction (Z direction). The lateral surfaces of the molding stage 24 are disposed so as to contact the inner lateral surfaces of the molding tank 22. The upper surfaces of the supplying stage 23 and the molding stage 24 are maintained horizontal.

The excessive powder tank 25 is a tank configured to retain the excessive powder 20 of the powder 20 flattened by the flattening part 12 upon forming the powder layer 31. The bottom of the excessive powder tank 25 may be provided with a suction part configured to suction the powder 20. The excessive powder tank 25 may be a removal part. The excessive powder tank 25 is disposed next to the molding tank 22. The excessive powder 20 retained in the excessive powder tank 25 may be returned to the supplying tank 21, or may be returned via a powder-supplying device to the supplying tank 21. The powder-supplying device may be disposed on the top of the supplying tank 21. The powder-supplying device supplies the powder 20 to the supplying tank 21 before the start of molding or when the amount of the powder 20 of the supplying tank 21 is reduced. Note that, although the powder tank 11 includes two tanks, i.e., the supplying tank 21 and the molding tank 22, the molding tank 22 alone may be provided, and the powder may be supplied from the powder-supplying device to the molding tank 22.

A method of conveying the powder 20 to the supplying tank 21 from the powder-supplying device is, for example, a screw conveyor-based system using a screw, a pneumatic conveying system using air, or the like.

The flattening part 12 flattens the molded layer 30 and the powder layer 31. The flattening part 12 flattens the molded layer 30 by rotating a recoater serving as a rotating body. The flattening part 12 is driven to rotate, and the powder 20 of the supplying stage 23 in the supplying tank 21 is supplied to the molding tank 22, thereby forming the

powder layer 31. The flattening part 12 reciprocally moves in the Y direction along the stage plane of the molding stage 24 (i.e., a plane on which the powder 20 is to be placed). More specifically, the flattening part 12 horizontally moves, from the external of the supplying tank 21, so as to travel above the supplying tank 21 and the molding tank 22. Thereby, the powder 20 is transferred and supplied to the molding tank 22. The powder 20 is flattened by the flattening part 12 that is passing over the molding tank 22, thereby forming the powder layer 31. The flattening part 12 is a member having dimensions larger than inner dimensions of the molding tank 22 and the supplying tank 21. Note that, the flattening part 12 may be a bar or a blade as a plate member.

The powder-removing part 13 removes the powder attached to the flattening part 12. The powder-removing part 13 moves together with the flattening part 12 in contact with the circumferential surface of the flattening part 12.

The applying part 5 includes a carriage 51 and a head 52.

The head 52 applies the molding liquid 10 to the powder layer 31. The head 52 is, for example, an inkjet head, and includes rows of nozzles each including a plurality of nozzles arranged. A color molded body may be formed by applying the molding liquid of cyan, the molding liquid of magenta, the molding liquid of yellow, and the molding liquid of black. Alternatively, the molding liquid of a single color may be applied from a plurality of nozzles. A method of applying the molding liquid may be ink jetting or dispensing.

At least one head 52 is provided in the carriage 51, and reciprocally moves in X (main scanning), Y (sub scanning), and Z directions by a motor, a guide, or the like.

The applying part 5 or the casing of the molding apparatus 1000 may include a heating part configured to heat the molded body formed by stacking the molded layer 30. Also, the molding apparatus 1000 may include the removing part that obtains the green body by removing the excessive molding material attached to the molded body heated by the heating part. Moreover, the molding apparatus 1000 may include the degreasing part configured to degrease the green body, and the sintering part configured to sinter the green body degreased by the degreasing part. Alternatively, the heating part, the removing part, the degreasing part, and the sintering part may be provided as devices different from the molding apparatus 1000, i.e., a heating device, a removing device, a degreasing device, and a sintering device. The sintering device may include the degreasing part and the sintering part. Because the heating part, the removing part, and the degreasing part can remove the powder and the molding liquid that are excessive in molding, it is possible to achieve molding with high accuracy.

## EXAMPLES

The present disclosure will be described below in more detail by way of examples. However, the present disclosure is not limited to the examples.

### (Example 1)

<Preparation of green body>

As the powder, $AlSi_{10}Mg_1$ (obtained from Toyo Aluminium K.K., Si10Mg-30BB, volume average particle diameter: 35 um) was used.

As the molding liquid, a solution prepared by mixing 13.4 parts by mass of a vinyl acetate resin (obtained from JAPAN VAM & POVAL CO., LTD., JMR-10LL), 86.5 parts by mass of triethylene glycol dimethyl ether, and 0.1 parts by mass of a silicone-based surfactant (obtained from Shin-Etsu Chemical Co., Ltd., KF-353), was used.

The above powder and the above molding liquid were used to prepare a green body with a binder jetting (BJ) device as illustrated in FIG. 3, followed by removal of excessive powder.

<Degreasing step and sintering step>

The green body after removal of excessive powder was placed in a vacuum and pressurized sintering furnace (obtained from Shimadzu Corporation, VESTA) serving as the sintering part, and was subjected to the degreasing step and the sintering step in accordance with the following procedure, thereby producing a sintered body as a molded body.

As the gas adsorbent, a non-evaporable ZrVFe getter (obtained from Nanjing THANKO New Material Technology Co., Ltd., TK707) was disposed around the green body so that the weight thereof per inner volume of the furnace would be 4.1 g/L. Also, the inner pressure of the furnace was adjusted so as to be 1,000 Pa (10.0 mbar). Further, the atmosphere in the furnace was an Ar atmosphere.

Temperature profiles in the degreasing step and the sintering step were as follows. Specifically, the degreasing step was performed through heating to a temperature equal to or higher than a temperature at which the vinyl acetate resin would be decomposed, and equal to or lower than the solidus-curve temperature (about 570°C) of $AlSi_{10}Mg$. Subsequently, the sintering step was performed through heating to a temperature equal to or higher than the solidus-curve temperature (about 570°C) of the green body and equal to or lower than the liquidus-curve temperature (about 600°C) of the green body.

<Evaluations>

In accordance with the following procedure, the density of the sintered body, the Mg percentage of the sintered body, and contamination of the interior of the furnace and of the sample in the furnace were evaluated. The results were presented in Table 1-1.

<<Density of the sintered body>>

The density of the obtained sintered body was measured.

Next, a percentage of the density of the metal contained in the sintered body relative to the theoretical density of the sintered body was calculated from the following formula and evaluated in accordance with the following evaluation criteria.

(Formula)

Percentage of the density of the sintered body (%) = (Density of the sintered body)/(Theoretical density) × 100

Note that, the density of the metal contained in the sintered body was measured in accordance with the Archimedes' method, JIS Z 2501. Specifically, the sintered body was immersed in oil (turbine oil AZ, ISO VG32, obtained from AZ Co., Ltd.). The pores in the surface of the sintered body were filled with oil, and the density of the metal contained in the sintered body was measured in accordance with the Archimedes' method. The theoretical density was 2.7 because aluminum was contained in the metal of Examples and Comparative Examples.

[Evaluation criteria]

A: The percentage of the density of the sintered body was 94% or higher.
B: The percentage of the density of the sintered body was 90% or higher and lower than 94%.
C: The percentage of the density of the sintered body was lower than 90%.

<<Mg percentage of the sintered body>>

15 mL of dilute hydrochloric acid having a concentration of 10% by mass was mixed with about 0.5 g of the powder or about 0.5 g of the sintered body, to completely dissolve the powder or the sintered body. The resulting solutions of the powder and the sintered body were measured for optical emission intensity with an inductively coupled plasma optical emission spectrometer (ICP-OES, obtained from Hitachi High-Tech Corporation) for calculating the Mg contents of the powder and the sintered body. The calibration-curve method was used for calculating the Mg contents thereof, and a calibration curve between the Mg content and the optical emission intensity was created. Then, the Mg percentage of the sintered body was calculated in accordance with the following formula, and evaluated in accordance with the following evaluation criteria.

$$\text{Mg percentage [\%]} = \frac{\text{Mg content of sintered body [\% by mass]}}{\text{Mg content of powder material [\% by mass]}} \times 100\ [\%]$$

[Evaluation criteria]

A: The Mg percentage of the sintered body was 70% or higher.

B: The Mg percentage of the sintered body was 20% or higher and lower than 70%.
C: The Mg percentage of the sintered body was lower than 20%.

<<Contamination of the interior of the furnace and of the sample in the furnace>>

The presence or absence of contamination, due to the gas adsorbent, of the interior of the sintering furnace and of the sample in the sintering furnace (sintered body) was visually confirmed, and was evaluated in accordance with the following evaluation criteria.

[Evaluation criteria]

A: No gas adsorbent was attached to the interior of the sintering furnace and the sample in the sintering furnace.
B: The gas adsorbent was attached to the interior of the sintering furnace and/or the gas adsorbent was attached to the sample in the sintering furnace.

(Examples 2 and 3)

Sintered bodies of Examples 2 and 3 were produced, and evaluated, in the same manner as in Example 1 except that the amount of the ZrVFe getter disposed in the furnace was increased. The results were presented in Table 1-1.
Examples 1 to 3 indicated that the sintered body with a favorable sintered density was obtained when the weight of the ZrVFe getter per inner volume of the furnace was 4.1 g/L or more. Note that, the inner volume of the furnace refers to an inner volume of the furnace itself, excluding the sintered body.

(Examples 4 to 6)

Example 4 to 6 used a powder-compacted shaped body produced in accordance with a production procedure for a powder-compacted shaped body, rather than the production procedure for the green body of Examples 1 to 3. Sintered bodies of Examples 4 to 6 were produced, and evaluated, in the same manner as in Examples 1 to 3 except that the weight of the ZrVFe getter per inner volume of the furnace was changed. The results were presented in Table 1-1.
Examples 4 to 6 indicated that the sintered body with a favorable sintered density was obtained.

<Production procedure of powder-compacted shaped body>

2.0 g of the powder was weighed, and charged into a part of a shape compactor (obtained from Maekawa Testing Machine MFG. Co., LTD.). The part charged with the powder was set in the shape compactor, and parts for pressurization were assembled. The handle of the shape compactor was rotated so that the pressurization value would be 29.4 kN or higher and 73.5 kN or lower. After the pressurization value was adjusted to a desired value, pressurization was performed for 60 seconds. After completion of the pressurization, the part was removed from the shape compactor, and the obtained powder-compacted shaped body was removed.

(Example 7)

A sintered body of Example 7 was produced, and evaluated, in the same manner as in Example 1 except that the atmosphere in the furnace was changed from Ar to $N_2$ and that the ZrVFe getter disposed in the furnace was changed to a ZrFe getter (obtained from Nanjing THANKO New Material Technology Co., Ltd., TK198). The results were presented in Table 1-1.
As a result, the sintered body with a favorable sintered density was found to be obtained.

(Example 8)

A sintered body of Example 8 was produced, and evaluated, in the same manner as in Example 1 except that the ZrVFe getter was changed to a ZrVMnFe getter (obtained from SAES Getters, ST2002). The results were presented in Table 1-1.
As a result, the sintered body with a favorable sintered density was found to be obtained.

(Example 9)

A sintered body of Example 9 was produced, and evaluated, in the same manner as in Example 1 except that the inner pressure of the furnace was changed from 1,000 Pa to 200 Pa (2.0 mbar). The results were presented in Table 1-1.

As a result, the sintered body with a favorable sintered density and an Mg percentage was found to be obtained.

(Comparative Example 1)

A sintered body of Comparative Example 1 was produced, and evaluated, in the same manner as in Example 1 except that no ZrVFe getter was disposed in the furnace. The results were presented in Table 1-2.

As a result, the sintered density of the sintered body was found to be lower.

(Comparative Example 2)

A sintered body of Comparative Example 2 was produced, and evaluated, in the same manner as in Example 4 except that no ZrVFe getter was disposed in the furnace. The results were presented in Table 1-2.

As a result, the sintered density of the sintered body was found to be lower.

(Comparative Examples 3 and 4)

Sintered bodies of Comparative Examples 3 and 4 were produced, and evaluated, in the same manner as in Example 1 except that the ZrVFe getter was changed to a Ti getter (obtained from OSAKA Titanium Technologies Co., Ltd., sponge titanium). The results were presented in Table 1-2.

As a result, the sintered density of the sintered body was found to be lower.

(Comparative Examples 5 and 6)

Sintered bodies of Comparative Examples 5 and 6 were produced, and evaluated, in the same manner as in Example 1 except that the ZrVFe getter was changed to a Mg getter (obtained from AS ONE Corporation, dissolvable metal material (Mg) granules). The results were presented in Table 1-2.

As a result, the sintered density of the sintered body was found to be lower, and the interior of the furnace and the sample in the furnace were found to be contaminated.

(Comparative Example 7)

A sintered body of Comparative Example 7 was produced, and evaluated, in the same manner as in Example 1 except that no ZrVFe getter was disposed in the furnace and sintering was performed in vacuum at 0.01 Pa ($1.0 \times 10^{-4}$ mbar). The results were presented in Table 1-2.

As a result, the Mg percentage of the sintered body was found to be lower.

Table 1-1

| | Powder material | | Type of shaped body | Degreasing and sintering steps | | Getter | | | Evaluations | | |
|---|---|---|---|---|---|---|---|---|---|---|---|
| | Composition | Median diameter [μm] | | Atmosphere in furnace | Inner pressure of furnace [Pa] | Chemical formula | Activation temp. [°C] | Weight per inner volume of furnace [g/L] | Density of sintered body | Mg percentage of sintered body | Contamination of interior of furnace and sample in furnace |
| Ex. 1 | $AlSi_{10}Mg$ | 35 | Green body | Ar | 1000 | ZrVFe | 400 | 4.1 | A | A | A |
| Ex. 2 | $AlSi_{10}Mg$ | 35 | Green body | Ar | 1000 | ZrVFe | 400 | 8.4 | A | A | A |
| Ex. 3 | $AlSi_{10}Mg$ | 35 | Green body | Ar | 1000 | ZrVFe | 400 | 24 | A | A | A |
| Ex. 4 | $AlSi_{10}Mg$ | 35 | Powder-compacted shaped body | Ar | 1000 | ZrVFe | 400 | 4.1 | A | A | A |
| Ex. 5 | $AlSi_{10}Mg$ | 35 | Powder-compacted shaped body | Ar | 1000 | ZrVFe | 400 | 8.4 | A | A | A |
| Ex. 6 | $AlSi_{10}Mg$ | 35 | Powder-compacted shaped body | Ar | 1000 | ZrVFe | 400 | 24 | A | A | A |
| Ex. 7 | $AlSi_{10}Mg$ | 35 | Powder-compacted shaped body | $N_2$ | 1000 | ZrFe | 300 | 1.2 | A | A | A |
| Ex. 8 | $AlSi_{10}Mg$ | 35 | Powder-compacted shaped body | Ar | 1000 | ZrVMnFe | 400 | 4.1 | A | A | A |

(continued)

| | Powder material | | Type of shaped body | Degreasing and sintering steps | | Getter | | | Evaluations | | |
|---|---|---|---|---|---|---|---|---|---|---|---|
| | Composition | Median diameter [μm] | | Atmosphere in furnace | Inner pressure of furnace [Pa] | Chemical formula | Activation temp. [°C] | Weight per inner volume of furnace [g/L] | Density of sintered body | Mg percentage of sintered body | Contamination of interior of furnace and sample in furnace |
| Ex. 9 | $AlSi_{10}Mg$ | 35 | Green body | Ar | 200 | ZrVFe | 400 | 4.1 | A | A | A |

Table 1-2

| | Powder material | | Type of shaped body | Degreasing and sintering steps | | Getter | | | Evaluations | | |
|---|---|---|---|---|---|---|---|---|---|---|---|
| | Composition | Median diameter [μm] | | Atmosphere in furnace | Inner pressure of furnace [Pa] | Chemical formula | Activation temp. [°C] | Weight per inner volume of furnace [g/L] | Density of sintered body | Mg percentage of sintered body | Contamination of interior of furnace and sample in furnace |
| Comp. Ex. 1 | $AlSi_{10}Mg$ | 35 | Green body | Ar | 1000 | - | - | 0 | C | A | A |
| Comp. Ex. 2 | $AlSi_{10}Mg$ | 35 | Powder-compacted shaped body | Ar | 1000 | - | - | 0 | C | A | A |
| Comp. Ex. 3 | $AlSi_{10}Mg$ | 35 | Green body | Ar | 1000 | Ti | 700 | 38.6 | C | A | A |
| Comp. Ex. 4 | $AlSi_{10}Mg$ | 35 | Green body | Ar | 1000 | Ti | 700 | 4.1 | C | A | A |
| Comp. Ex. 5 | $AlSi_{10}Mg$ | 35 | Green body | Ar | 1000 | Mg | 500 | 40.3 | C | A | B |
| Comp. Ex. 6 | $AlSi_{10}Mg$ | 35 | Green body | Ar | 1000 | Mg | 500 | 4.1 | C | A | B |
| Comp. Ex. 7 | $AlSi_{10}Mg$ | 35 | Green body | Ar | 0.01 | - | - | 0 | C | C | A |

Aspects of the present disclosure are, for example, as follows.

<1> A sintered body production method, including: sintering a sintering precursor containing a metal in the presence of a gas adsorbent, the gas adsorbent being activated at a temperature at which the metal is not oxidized.
<2> The sintered body production method according to <1>, wherein the gas adsorbent is a non-evaporable gas adsorbent.
<3> The sintered body production method according to <2>, wherein the non-evaporable gas adsorbent contains Zr.
<4> The sintered body production method according to <3>, wherein the non-evaporable gas adsorbent further contains at least one metal element selected from the group consisting of Ni, V, Mn, Fe, Y, Co, Pd, and Ti.
<5> The sintered body production method according to any one of <1> to <4>, wherein the temperature at which the metal is not oxidized is 450°C or lower.
<6> The sintered body production method according to any one of <1> to <5>, wherein the metal contains powder of a pure metal, powder of an alloy, or both.
<7> The sintered body production method according to any one of <1> to <6>, wherein the metal contains Al.
<8> The sintered body production method according to any one of <1> to <7>, wherein the metal further contains Si, Mg, or both.
<9> The sintered body production method according to any one of <1> to <8>, wherein the sintering is performed in an atmosphere containing an inert gas.
<10> The sintered body production method according to <9>, wherein the inert gas is $N_2$ or Ar.
<11> The sintered body production method according to any one of <1> to <10>, wherein an inner pressure of a furnace in the sintering is 200 Pa or higher.
<12> The sintered body production method according to any one of <1> to <11>, wherein a weight of the gas adsorbent per inner volume of a furnace is 4.1 g/L or more.
<13> The sintered body production method according to any one of <1> to <12>, further including: forming a powder layer of powder containing the metal; applying a molding liquid to the powder layer; and sequentially repeatedly performing the forming and the applying, to form a stacked body.
<14> The sintered body production method according to any one of <1> to <13>, further including: heating a stacked body in an atmosphere containing an inert gas, to form a degreased body from which a resin is removed.

The sintered body production method according to any one of <1> to <14> can solve the existing problems in the art and achieve the object of the present disclosure.
According to the present disclosure, it is possible to provide a sintered body production method that can produce a sintered body with a high sintered density.

REFERENCE SIGNS LIST

10 molding liquid
20 powder
100 sintering furnace (sintered body production apparatus)
101 sintering vessel
102 sintering precursor
103 non-evaporable gas adsorbent
1000 molding apparatus (molded body production apparatus)

**Claims**

1. A sintered body production method, comprising:
sintering a sintering precursor containing a metal in the presence of a gas adsorbent, the gas adsorbent being activated at a temperature at which the metal is not oxidized.

2. The sintered body production method according to claim 1, wherein
the gas adsorbent is a non-evaporable gas adsorbent.

3. The sintered body production method according to claim 2, wherein
the non-evaporable gas adsorbent contains Zr.

4. The sintered body production method according to claim 3, wherein the non-evaporable gas adsorbent further contains at least one metal element selected from the group consisting of Ni, V, Mn, Fe, Y, Co, Pd, and Ti.

5. The sintered body production method according to any one of claims 1 to 4, wherein the temperature at which the metal is not oxidized is 450°C or lower.

6. The sintered body production method according to any one of claims 1 to 5, wherein the metal contains powder of a pure metal, powder of an alloy, or both.

7. The sintered body production method according to any one of claims 1 to 6, wherein the metal contains Al.

8. The sintered body production method according to any one of claims 1 to 7, wherein the metal further contains Si, Mg, or both.

9. The sintered body production method according to any one of claims 1 to 8, wherein the sintering is performed in an atmosphere containing an inert gas.

10. The sintered body production method according to claim 9, wherein the inert gas is $N_2$ or Ar.

11. The sintered body production method according to any one of claims 1 to 10, wherein an inner pressure of a furnace in the sintering is 200 Pa or higher.

12. The sintered body production method according to any one of claims 1 to 11, wherein a weight of the gas adsorbent per inner volume of a furnace is 4.1 g/L or more.

13. The sintered body production method according to any one of claims 1 to 12, further comprising:

    forming a powder layer of powder containing the metal;
    applying a molding liquid to the powder layer; and
    sequentially repeatedly performing the forming and the applying, to form a stacked body.

14. The sintered body production method according to any one of claims 1 to 13, further comprising: heating a stacked body in an atmosphere containing an inert gas, to form a degreased body from which a resin is removed.

FIG.1

100

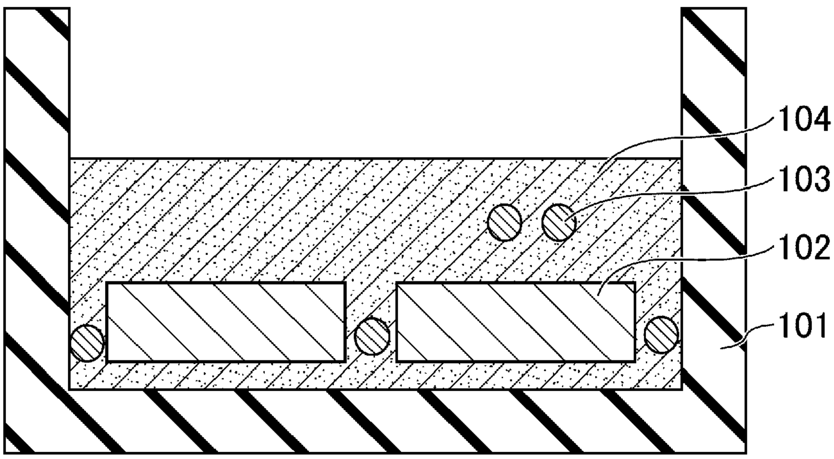

FIG.2

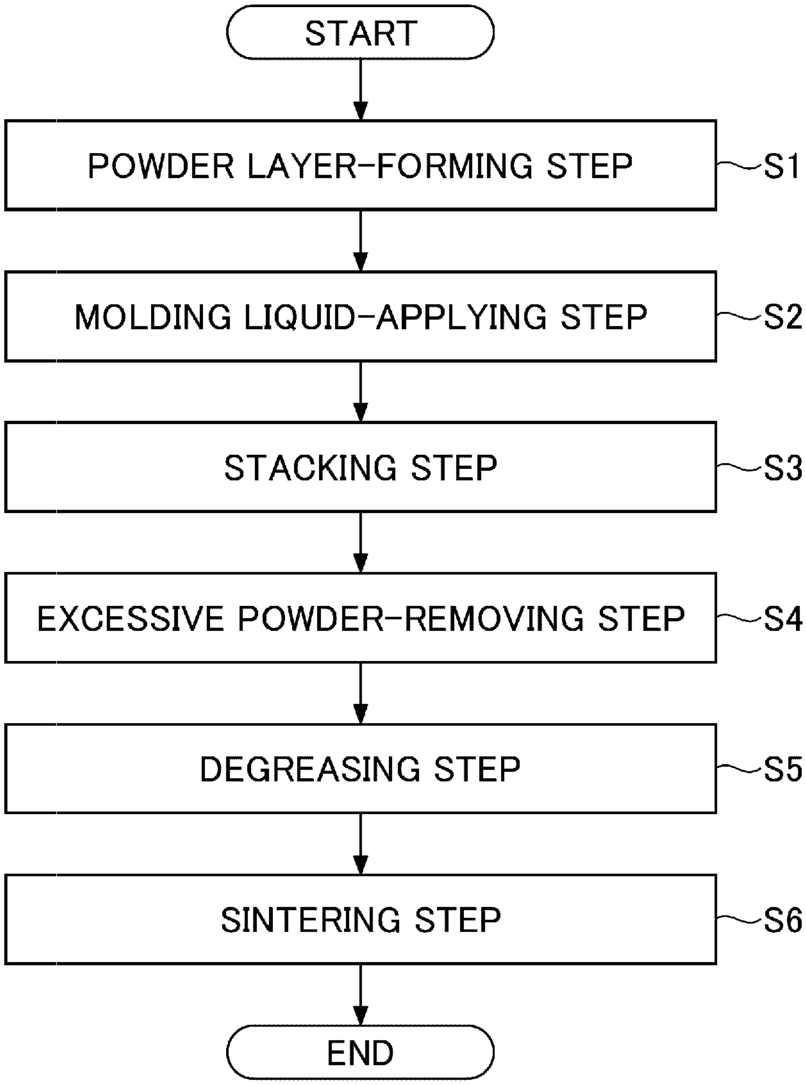
START
POWDER LAYER-FORMING STEP
S1
MOLDING LIQUID-APPLYING STEP
S2
STACKING STEP
S3
EXCESSIVE POWDER-REMOVING STEP
S4
DEGREASING STEP
S5
SINTERING STEP
S6
END

FIG.3

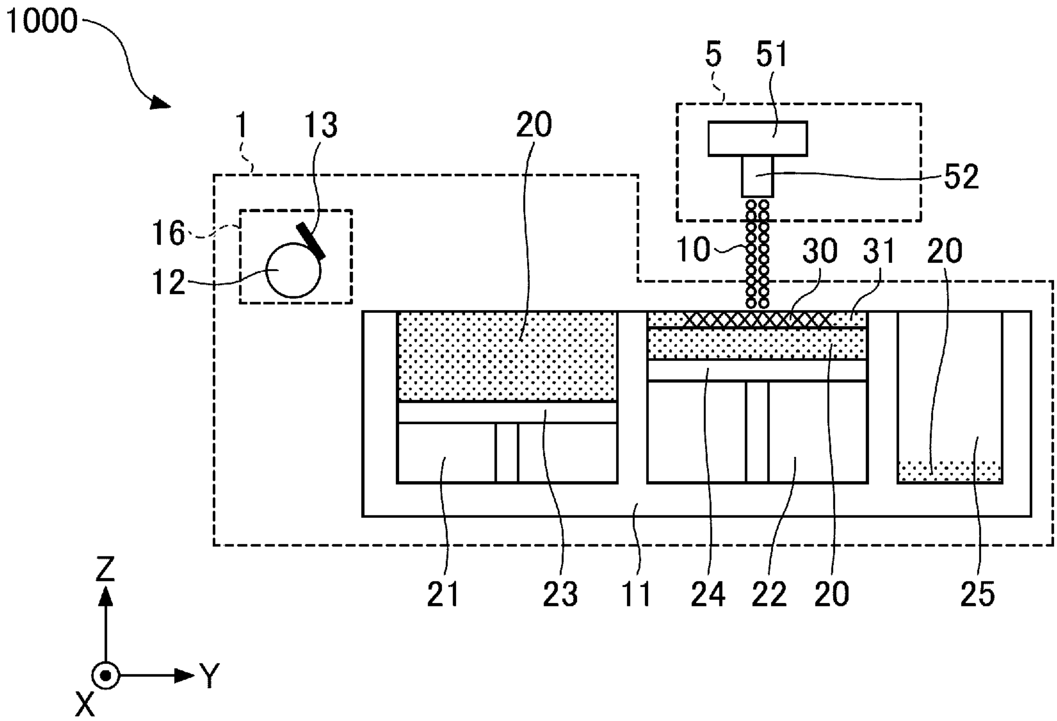

Europäisches Patentamt
European Patent Office
Office européen des brevets

# EUROPEAN SEARCH REPORT

Application Number
EP 24 15 9136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "St 707 - Non evaporable getters activatable at low temperatures", , 13 June 2010 (2010-06-13), XP093182391, Retrieved from the Internet: URL:https://web.archive.org/web/20100613101822if_/http://psec.uchicago.edu/getters/St%20707%20Brochure.pdf * the whole document * ----- | 1-14 | INV. C22C1/04 B22F10/14 B33Y10/00 B33Y40/20 C22C21/02 C22C21/06 B22F3/10 |
| X | HEANEY DONALD F ET AL: "Advances in the Sintering of Titanium Powders", EURO PM2004, 1 January 2004 (2004-01-01), XP093182395, Retrieved from the Internet: URL:https://www.cavs.msstate.edu/publications/docs/2004/07/2004-26.pdf> * abstract * * section "Experimental" * ----- | 1,2,5,6, 9-12 | |
| A | SCHAFFER G B ET AL: "The influence of the atmosphere on the sintering of aluminum", METALLURGICAL AND MATERIALS TRANSACTIONS A, SPRINGER-VERLAG, NEW YORK, vol. 33, no. 10, 1 October 2002 (2002-10-01), pages 3279-3284, XP019694158, ISSN: 1543-1940 * the whole document * ----- | 1-14 | TECHNICAL FIELDS SEARCHED (IPC) B22F C22C B33Y |
| X | WO 2022/153034 A1 (BAE SYSTEMS PLC [GB]) 21 July 2022 (2022-07-21) * page 1, lines 4-5 * * page 14, lines 11-13 * * page 17, line 24 * * page 20, lines 4-14 * * claim 1 * ----- -/-- | 1-11 | |

The present search report has been drawn up for all claims

1

| Place of search | Date of completion of the search | Examiner |
|---|---|---|
| The Hague | 5 July 2024 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 24 15 9136

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/178241 A1 (MIRONETS SERGEY [US] ET AL) 26 June 2014 (2014-06-26)<br>* paragraphs [0003], [0012], [0015], [0025], [0028] *<br>* figure 1 *<br>----- | 1-3,5,6, 9,10 | |
| X | US 2021/154738 A1 (CHAO MICHELLE LING [US] ET AL) 27 May 2021 (2021-05-27)<br>* paragraphs [0026], [0041], [0047] - [0055] *<br>* claims 1-9 *<br>----- | 13,14 | |

TECHNICAL FIELDS SEARCHED (IPC)

The present search report has been drawn up for all claims

1

| Place of search | Date of completion of the search | Examiner |
|---|---|---|
| The Hague | 5 July 2024 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 24 15 9136

This annex lists the patent family members relating to the patent documents cited in the above-mentioned European search report. The members are as contained in the European Patent Office EDP file on
The European Patent Office is in no way liable for these particulars which are merely given for the purpose of information.

05-07-2024

| Patent document cited in search report | Publication date | Patent family member(s) | Publication date |
|---|---|---|---|
| WO 2022153034 A1 | 21-07-2022 | EP 4278021 A1 | 22-11-2023 |
| | | GB 2602888 A | 20-07-2022 |
| | | JP 2024505442 A | 06-02-2024 |
| | | US 2024075528 A1 | 07-03-2024 |
| | | WO 2022153034 A1 | 21-07-2022 |
| US 2014178241 A1 | 26-06-2014 | NONE | |
| US 2021154738 A1 | 27-05-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010500469 A


### Non-patent literature cited in the description


- **TAKASHI ABE.** Regarding Aluminum Surface Phenomenon. *Journal of Aluminum Finishing Society of Kinki,* 1973, vol. 38, 8-18